# EUROPEAN PATENT APPLICATION

(11) **EP 3 750 718 A1**
(43) Date of publication of application: **16.12.2020**
(21) Application number: 19750755.1
(22) Date of filing: 29.01.2019
(51) Int. Cl.: B44C 3/02, B32B 7/023, G02B 27/22, G03B 35/00

(54) **DECORATIVE SHEET**

(30) Priority: 06.02.2018 JP 2018019019
(71) Applicant: FUJIFILM Corporation, Tokyo 106-8620 (JP)
(72) Inventor: NAKAMURA, Samito, Tokyo 107-0052 (JP)
(74) Representative: Klunker IP Patentanwälte PartG mbB
(86) International application number: PCT/JP2019/002889
(87) International publication number: WO 2019/155938

(57) **Abstract**

In a decorative sheet using a lenticular lens sheet, even though a text is included in a design of an image constituting an image forming layer, a decorative sheet in which text is easily recognized is provided.

A decorative sheet (10) includes a lenticular lens sheet (11) and an image forming layer. The lenticular lens sheet (11) includes a plurality of cylindrical lenses (15). The image forming layer includes a first image (PI) and a second image (P2). The first image (PI) is an image representing a pattern, and the second image (P2) includes a text and a gradation pattern arranged as a background of the text.

## Description

### BACKGROUND OF THE INVENTION

### 1. Field of the Invention

The present invention relates to a decorative sheet using a lenticular lens.

### 2. Description of the Related Art

Decorative sheets used for decoration of various products are known. Among the decorative sheets, there is a decorative sheet using a lenticular lens sheet (for example, see JP1999-212024A (JP-H11-212024A) and JP2016-038476A). The decorative sheet using the lenticular lens sheet includes a lenticular lens sheet and an image forming layer. The lenticular lens sheet has a plurality of cylindrical lenses each having a convex shape, and has a flat surface on a side opposite to the convex shape. The image forming layer is formed on the flat surface side of the lenticular lens sheet. The image forming layer has, for example, two images, a first image and a second image. The first image includes a plurality of first divided images divided into strips, and the second image includes a plurality of second divided images into strips.

Within a unit region corresponding to one cylindrical lens, one first divided image and one second divided image are arranged along an arrangement direction of the cylindrical lens. In a case where an observation direction in which the image forming layer is observed through the lenticular lens sheet changes, an angle to be observed by a user changes with respect to the cylindrical lens. Thus, an image viewed by the user is only one of the first divided image and the second divided image according to the angle to be observed. Accordingly, the first image and the second image to be viewed are switched.

The design of the first image or the second image may include a text as described in JP2016-038476A.

### SUMMARY OF THE INVENTION

As described in JP2016-038476A, in a case where the text is included in the design of the first image or the second image of the image forming layer, there are the following problems. For example, in a case where the design of the first image is a pattern, the design of the second image is a text, and the first image and the second image are switched, the pattern of the first image and the text of the second image are visually mixed, and visibility deteriorates, that is, so-called crosstalk occurs. In a case where the crosstalk occurs, the text is buried in the pattern as the background, and the visibility of the text deteriorates.

An object of the present invention is to provide a decorative sheet in which a text is easily recognized even though the text is included in a design of an image constituting an image forming layer in a decorative sheet using a lenticular lens sheet.

A decorative sheet of the present invention comprises a lenticular lens sheet, and an image forming layer. One first divided image and one second divided image are arranged along an arrangement direction of the cylindrical lens within a unit region corresponding to one cylindrical lens. A first image and a second image are switched by changing an observation direction in which the image forming layer is observed through the lenticular lens sheet. The first image is an image representing a pattern, and the second image is an image including a line, and a gradation pattern which is a background of the line. A lenticular lens sheet has a plurality of cylindrical lenses each having a convex shape, and has a flat surface on a side opposite to the convex shape. The image forming layer is formed on the flat surface side, and includes the first image and the second image. The first image includes a plurality of first divided images divided into strips, and the second image includes a plurality of second divided images divided into strips.

It is preferable that the line is used as a component of any of line drawing including a straight line and/or a curve, a shape of an article, a text, a sign, and a symbol mark.

It is preferable that the image forming layer includes a third image representing a pattern different from the pattern included in the first image and the second image in addition to the first image and the second image and a third divided image obtained by dividing the third image into strips is arranged in addition to the first divided image and the second divided image in the unit region.

It is preferable that the gradation pattern is expressed in a gray gradation.

It is preferable that shading of the gradation pattern continuously or stepwisely changes.

It is preferable that a direction in which the shading of the gradation pattern changes and the arrangement direction of the cylindrical lens are the same direction.

It is preferable that the gradation pattern has an achromatic color.

It is preferable that colors of the pattern of the first image and the line of the second image are similar colors, and a color of the gradation pattern as the background of the line of the second image is a non-similar color to the color of the line.

According to the present invention, in the decorative sheet using the lenticular lens sheet, since the first image and the second image are provided as the image forming layer, the first image is the image representing the pattern, and the second image is the image representing the text and the gradation pattern arranged as the background of the text, the character of the second image is easily recognized.

### BRIEF DESCRIPTION OF THE DRAWINGS

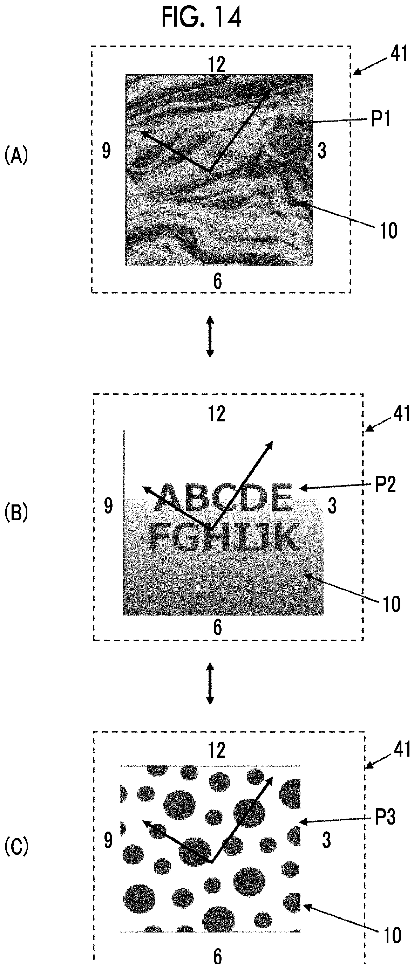

Fig. 1 is a perspective view for describing a configuration of a decorative sheet of the present invention.
(A) and (B) of Fig. 2 are explanatory diagrams for describing images to be observed in a case where the decorative sheet is observed through a cylindrical lens. (A) of Fig. 2 shows a first image, and (B) of Fig. 2 shows a second image.
Fig. 3 is an explanatory diagram of the second image including a text and a gradation pattern.
Fig. 4 is an explanatory diagram of a direction in which shading of the gradation pattern changes.
Fig. 5 is an explanatory diagram of similar colors.
Fig. 6 is an explanatory diagram of a plurality of divided images arranged within a unit region of a cylindrical lens.
Fig. 7 is a transverse cross-sectional view of a main part of the decorative sheet cut along an arrangement direction of the cylindrical lens.
(A) and (B) of Fig. 8 are explanatory diagrams in a case where the decorative sheet is used for a dial of a wristwatch. (A) of Fig. 8 shows a state in which the first image is viewed, and (B) of Fig. 8 shows a state in which the second image is viewed.
Fig. 9 is an explanatory diagram of a continuous change in shading.
Fig. 10 is an explanatory diagram of a stepwise change in shading.
Fig. 11 is an explanatory diagram of an example in which a direction in which the shading changes matches the arrangement direction of the cylindrical lens.
Fig. 12 is an explanatory diagram of divided images according to a second embodiment.
Fig. 13 is a transverse cross-sectional view of a main part of a decorative sheet according to the second embodiment cut along an arrangement direction of a cylindrical lens.
(A) to (C) of Fig. 14 are explanatory diagrams in a case where the decorative sheet according to the second embodiment is used for a dial of a wristwatch. (A) of Fig. 14 shows a state in which the first image is viewed, (B) of Fig. 14 shows a state in which the second image is viewed, and (C) of Fig. 14 shows a state in which the third image is viewed.

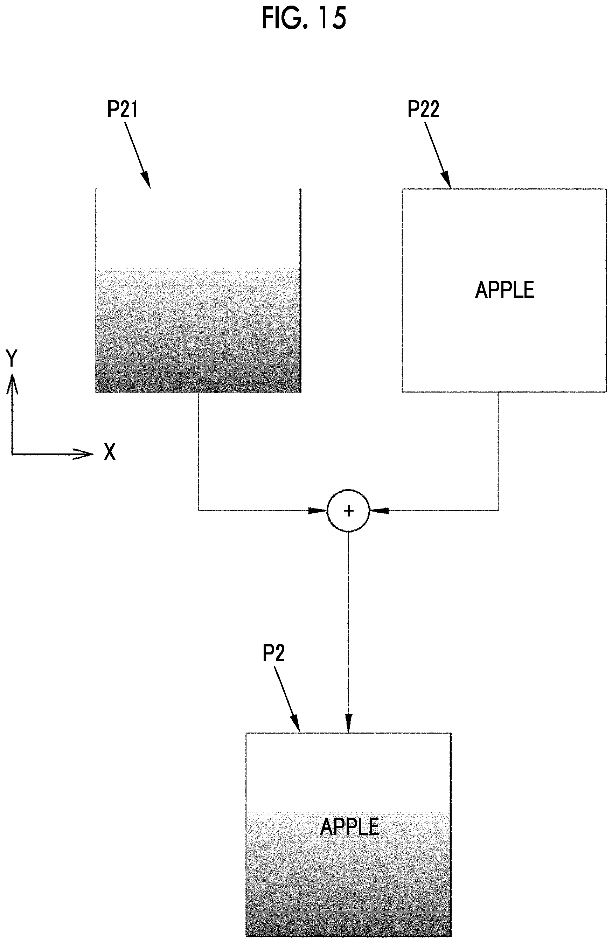

Fig. 15 is an explanatory diagram of a second image which is a character string having a line as a component and includes a character string representing a meaningful word.

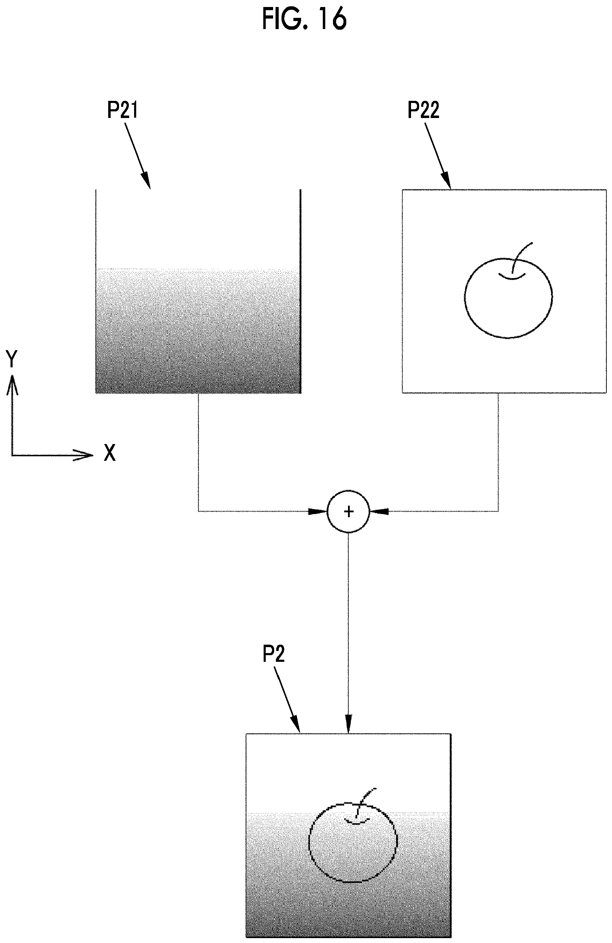

Fig. 16 is an explanatory diagram of a second image including a shape of an article having a line as a component.

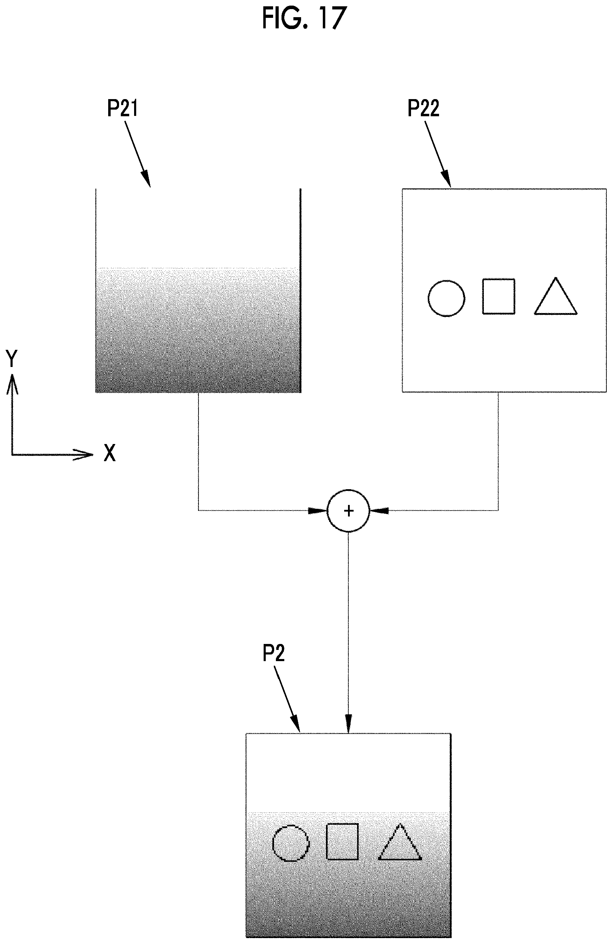

Fig. 17 is an explanatory diagram of a second image including line drawing having a line as a component.

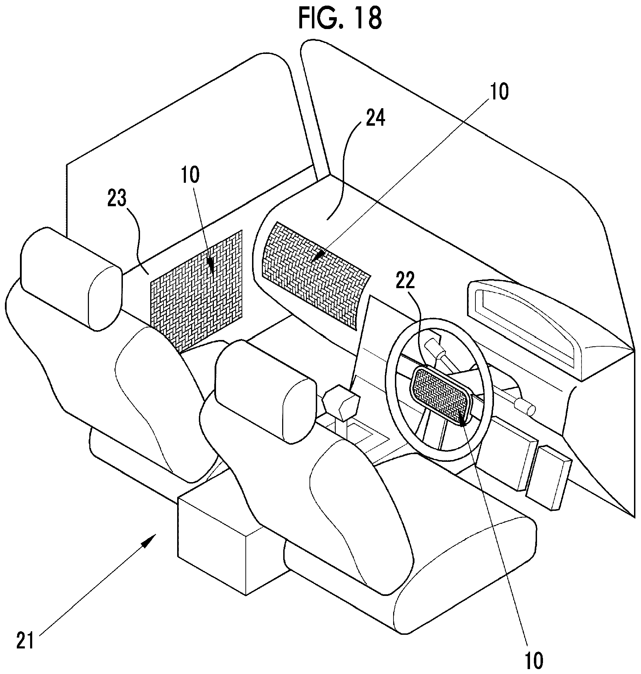

Fig. 18 is a perspective view showing an example in which the decorative sheet is attached to an interior component of a vehicle.

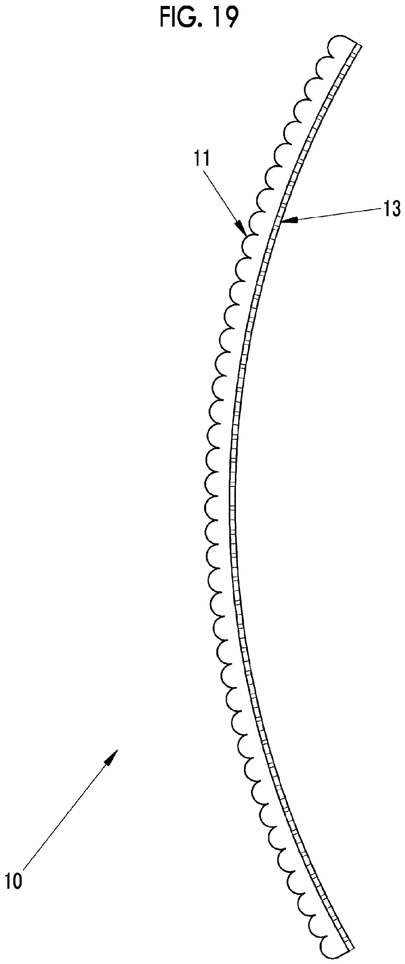

Fig. 19 is a cross-sectional view showing a state in which the decorative sheet is curved.

### DESCRIPTION OF THE PREFERRED EMBODIMENTS

### [First embodiment]

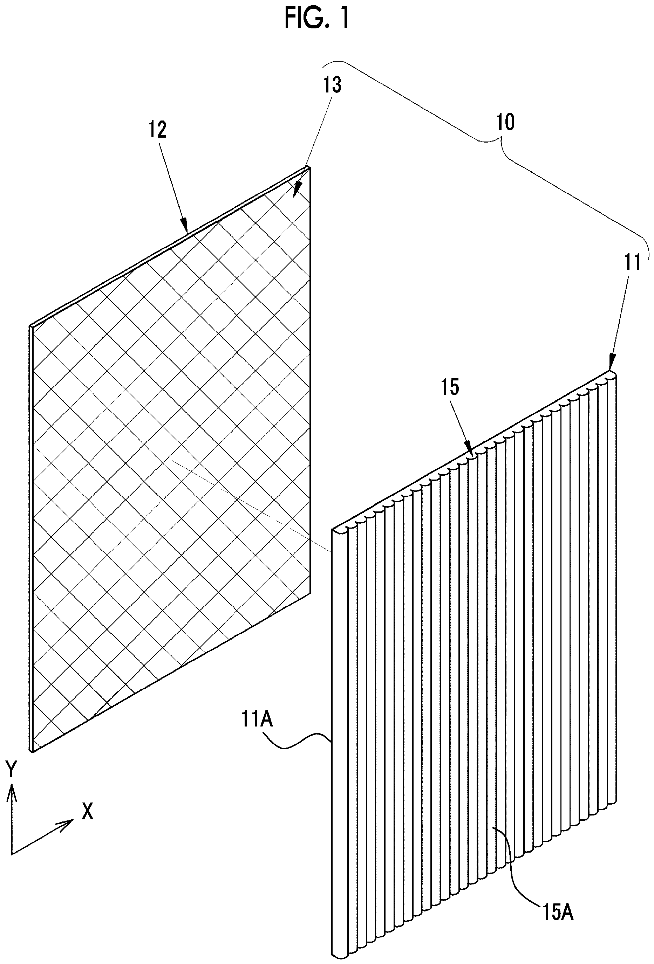

As shown in Fig. 1, a decorative sheet 10 comprises a lenticular lens sheet 11 and an image forming layer 13. The image forming layer 13 and the lenticular lens sheet 11 are shown as being separated from each other in Fig. 1 for the sake of convenience, but the image forming layer 13 is actually formed on one surface of the lenticular lens sheet 11.

The lenticular lens sheet 11 includes a plurality of cylindrical lenses 15. Each cylindrical lens 15 has a semi-cylindrical convex shape 15A, and a side opposite to the convex shape 15A is flat. Each of the cylindrical lenses 15 has a longitudinal direction extending in a Y direction, and is arranged in parallel with an adjacent cylindrical lens 15. That is, the cylindrical lenses 15 are arranged at predetermined pitches in an X direction orthogonal to the Y direction. In the present example, the X direction is a direction in which the plurality of cylindrical lenses 15 is arranged. The lenticular lens sheet 11 has a flat surface 11A on the side opposite to the convex shape 15A.

A transparent resin material such as polyethylene terephthalate (PET), polypropylene (PP), glycol-modified polyethylene terephthalate (PETG), polycarbonate, acrylic, or acrylate resin is used as a material of the lenticular lens sheet 11.

The image forming layer 13 is formed on the flat surface 11A side of the lenticular lens sheet 11. The image forming layer 13 is directly formed on the flat surface 11A by printing or transferring an image on the flat surface 11A. A material of the image forming layer 13 is not particularly limited as long as the material can adhere to the flat surface 11A of the lenticular lens sheet 11, and a known paint is used.

The image forming layer 13 may not be directly formed on the lenticular lens sheet 11. For example, the image forming layer 13 may be formed on a transparent sheet different from the lenticular lens sheet 11, and this transparent sheet may be bonded to the lenticular lens sheet 11 by using a method such as adhesion or pressure sensitive adhesion. It is preferable that a transparent material is used as a bonding agent such as an adhesive or a pressure sensitive adhesive such that the image forming layer 13 can be observed through the lenticular lens sheet 11.

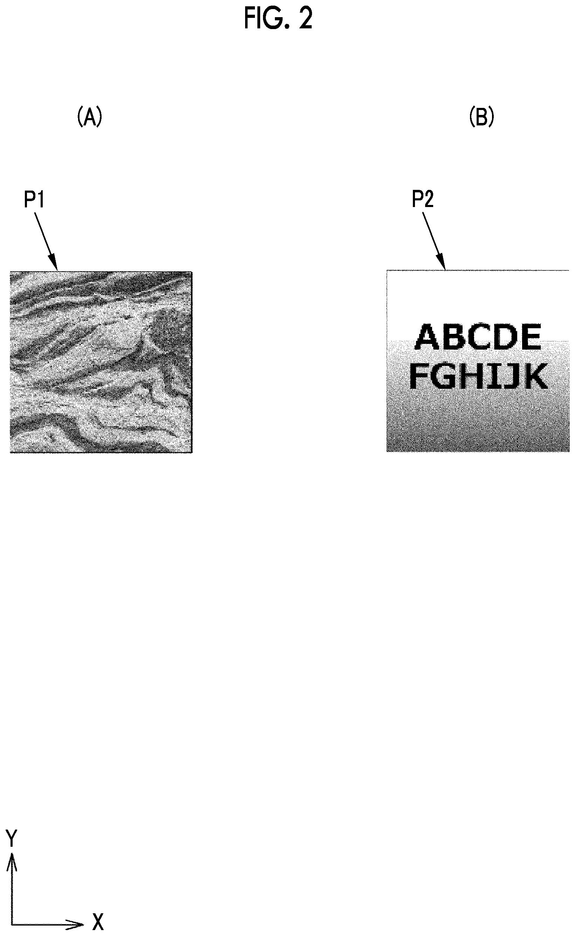

As shown in (A) and (B) of Fig. 2, the image forming layer 13 includes, for example, a first image P1 shown in (A) of Fig. 2 and a second image P2 shown in (B) of Fig. 2. The first image P1 is an image on which a pattern is represented, and in the present example, the pattern is a marble pattern. The second image P2 is an image including lines and a gradation pattern that is a background of the lines. In the second image P2 of the present example, the lines are used as components of the text. Specifically, the second image includes text such as "ABCDE..." and a one-color gradation pattern arranged as a background of the text.

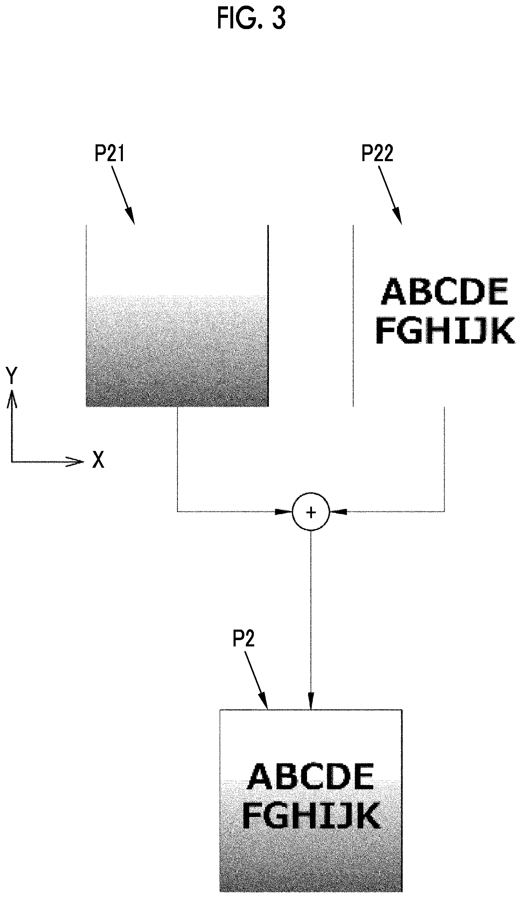

As shown in Fig. 3, the second image P2 is includes, for example, an element image P21 of which a design is a gradation pattern and an element image P22 of which a design is text, and the second image is an image obtained by combining these element images. That is, the second image P2 is an image on which the text and the gradation pattern that is the background of the text are represented.

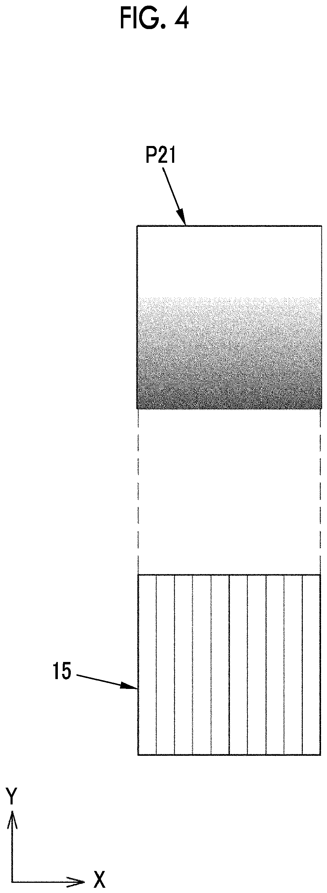

As shown in Fig. 4, the element image P21 is a gradation pattern having a change in shading. A density of the gradation pattern is the highest at a lower end, and becomes lower toward an upper end. In the present example, the gradation pattern has an achromatic color of black, gray, and white, and is represented by gray gradation. The change in shading of the gradation pattern is continuous. A direction in which the shading of the gradation pattern changes is a direction (Y direction) orthogonal to the arrangement direction (X direction) of the cylindrical lenses 15.

The text of the element image P22 is arranged such that at least a part thereof overlaps the gradation pattern of the element image P21. Thus, in the second image P2, the gradation pattern is the background of the text.

A color of the pattern and a color of the text of the first image P1 are similar colors. In this case, in the second image P2, a color of the text of the element image P22 and a color of the gradation pattern of the element image P21 that is the background of the color of the text are non-similar colors.

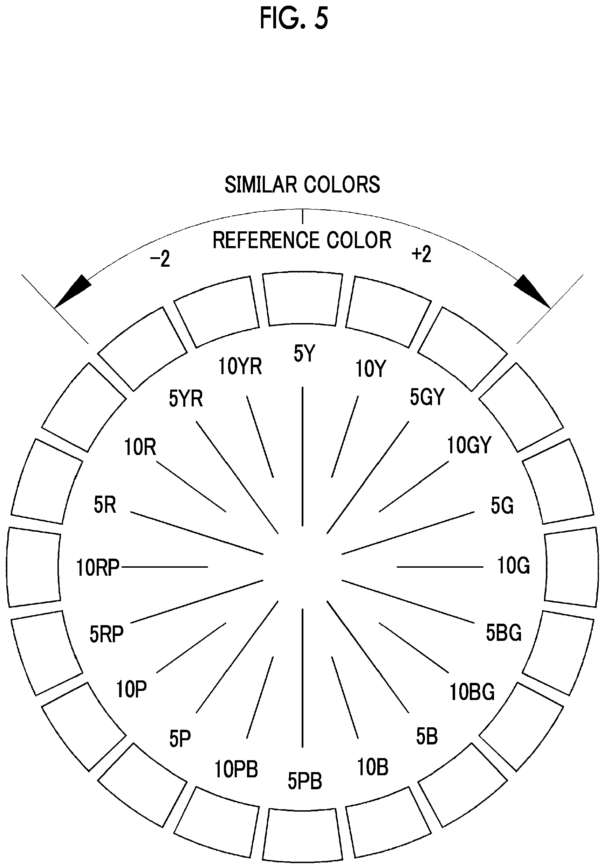

The similar colors are defined by using a hue circle of the Munsell color system shown in Fig. 5. As is well known, the hue circle relates to hue among three attributes (hue, saturation, and brightness) of a color, and represents the classification of tints of a chromatic color. Here, in the Munsell hue circle divided into 20 colors, in a case where one hue is used as a reference color, colors included in a range of two colors adjacent in a plus direction (clockwise direction) and a minus direction (counterclockwise direction) of the reference color are similar colors to the reference color.

For example, in a case where the reference color is a representative hue (5Y) of yellow, colors in a range of hues (10Y and 5GY) of two colors adjacent in the plus direction from the representative hue (5Y) of yellow and hues (10YR and 5YR) of two colors adjacent in the minus direction from the representative hue (5Y) are similar colors of the representative hue (5Y) of yellow. In a case where a representative hue (5B) of blue is the reference color, a range of hues of two colors adjacent in the plus direction and the minus direction with the blue representative hue (5B) of blue as the reference color is a range of the similar colors. Colors other than the similar colors are the non-similar colors.

In a case where the reference color is the chromatic color, a range of the non-similar colors of the reference color include achromatic colors of white, gray, and black.

In the present example, both the color of the pattern of the first image P1 and the color of the text of the second image P2 are light blue in bluish colors and are the similar colors. Since the color of the gradation pattern of the second image P21 is an achromatic color, the light blue of the text is a chromatic color having a tint, and thus, the achromatic color is the non-similar color to the light blue of the chromatic color.

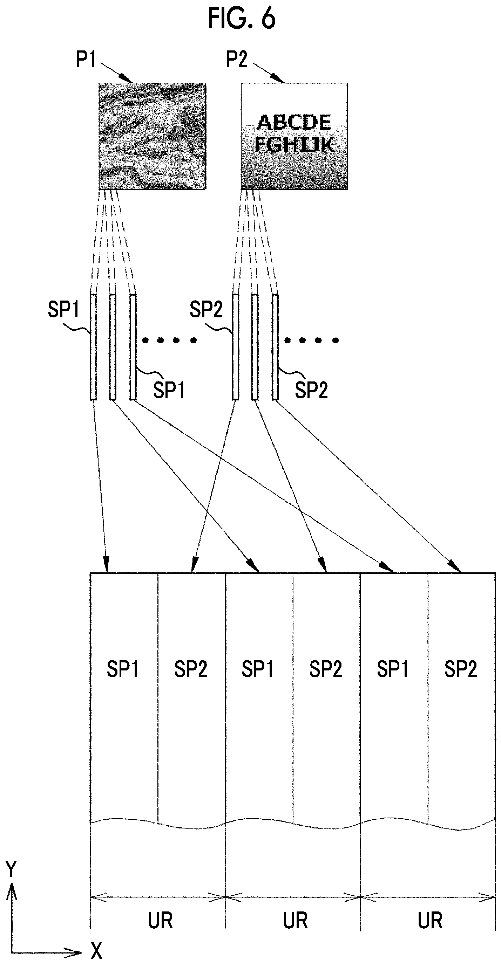

As shown in Fig. 6, the first image P1 and the second image P2 include a plurality of first divided images SP1 and a plurality of second divided images SP2 that are divided into strips, respectively. A part of the design of the first image P1 is drawn in each of the plurality of first divided images SP1. The same applies to the second divided image SP2.

The first divided images SP1 are arranged on the flat surface 11A of the lenticular lens sheet 11, along the Y direction in the longitudinal direction. In other words, the longitudinal direction of the first divided images SP1 is arranged along the longitudinal direction (Y direction) of the cylindrical lens 15. The same applies to the second divided image SP2.

On the flat surface 11A of the lenticular lens sheet 11, one first divided image SP1 and one second divided image SP2 are arranged in each unit region UR corresponding to the cylindrical lens 15. That is, in one unit region UR, a set of four divided images of the first divided image SP1 and the second divided image SP2 is arranged.

A width of the unit region UR in the X direction corresponds to a width of the cylindrical lens 15 in the X direction. The widths of the first divided image SP1 and the second divided image SP2 are the same.

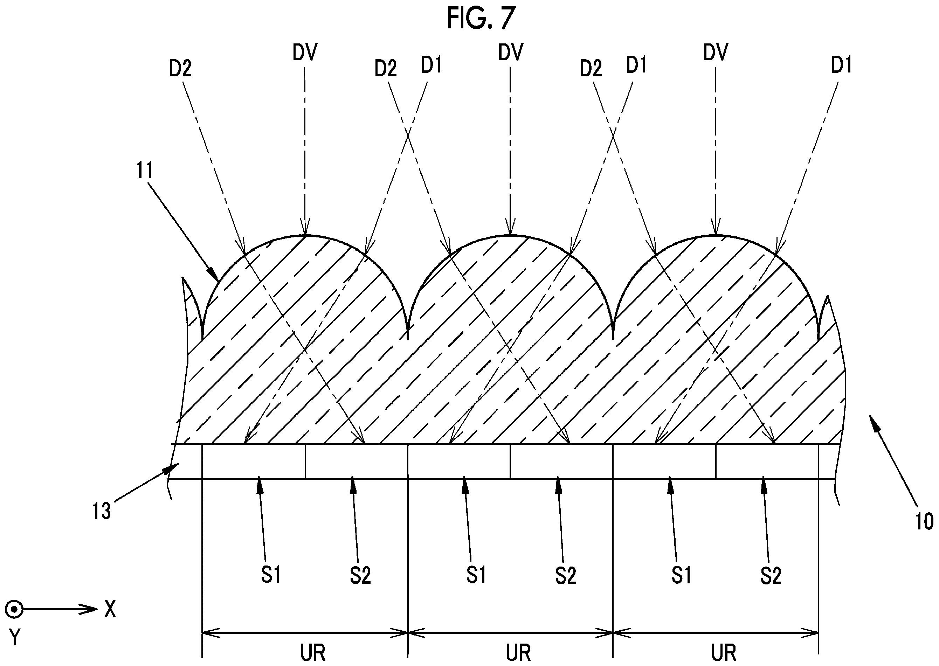

Fig. 7 shows a cross section of the decorative sheet 10 in the X direction. As shown in Fig. 7, the decorative sheet 10 is observed from a side having the convex shape 15A of the lenticular lens sheet 11. A curvature of the convex shape 15A of the cylindrical lens 15 is set such that a focal point is located on the image forming layer 13.

Within each unit region UR shown in Fig. 7 the first divided image SP1 and the second divided image SP2 are arranged in this order from the left. Due to an action of each cylindrical lens 15, the image viewed by the user of the first divided image SP1 and the second divided image SP2 in each unit region UR changes depending on an observation direction.

In a case where the image forming layer 13 of the decorative sheet 10 is observed from a first direction D1 inclined to the right from an orthogonal direction DV to the flat surface 11A, only the first divided image SP1 is observed. In a case where the image forming layer 13 of the decorative sheet 10 is observed from a second direction D2 inclined to the left from the orthogonal direction DV, only the second divided image SP2 is observed.

A part of the design of the marble pattern of the first image P1 is formed in the first divided image SP1. A part of the text or the gradation pattern of the second image P2 is formed in the second divided image SP2.

Therefore, the observation direction in which the decorative sheet 10 is observed through the lenticular lens sheet 11 is changed in order of the first direction D1 and the second direction D2, and thus, the first image P1 of which the design is the marble pattern and the second image P2 of which the design includes the text and the gradation pattern as the background of the text.

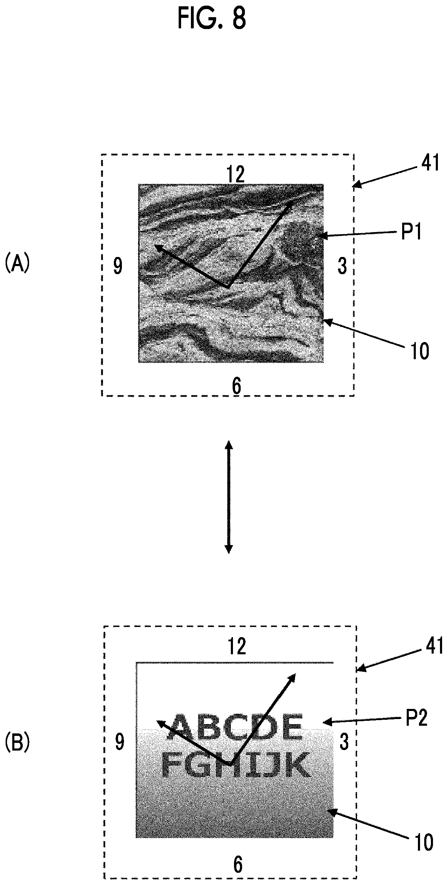

Actions of the aforementioned configuration will be described with reference to (A) and (B) of Fig. 8. (A) and (B) of Fig. 8 show examples in which the decorative sheet 10 is used for a dial of a wristwatch 41. In (A) and (B) of Fig. 8, in the wristwatch 41, a long hand and a short hand indicate about 10:05. The decorative sheet 10 is used for a dial having a background of the long hand and the short hand. In a case where the observation direction with respect to the dial for which the decorative sheet 10 is used changes, an image to be viewed is switched to each image of the first image P1 and the second images P2. (A) of Fig. 8 shows a state in which the first image P1 is viewed, and (B) of Fig. 8 shows a state in which the second image P2 is viewed.

The design of the first image P1 is a bluish marble pattern, and the text of the second image P2 has the similar color as the color of the marble pattern. Therefore, the color of the marble pattern in the first image P1 and the color of the text of the second image P2 are mixed. However, the second image P2 has, as the background of the text, an achromatic gradation pattern that is the non-similar color to the color of the text. Therefore, the achromatic gradation pattern of the second image P2 and the bluish marble pattern of the first image P1 are also mixed. The achromatic gradation pattern is mixed with the bluish marble pattern, and thus, the color of the marble pattern changes. Originally, the marble pattern has the similar color to the color of the text, but the marble pattern overlaps with the gradation pattern. The color of the marble pattern changes in any of hue, brightness, and saturation. Therefore, a difference is generated between the color of the text and the color of the marble pattern, and the text is prevented from being buried in the background.

That is, even though the text is included in the design of the second image P2 constituting the image forming layer 13 in the decorative sheet 10 using the lenticular lens sheet 11, in a case where the first image P1 and the second image P2 are switched, since crosstalk of the text of the second image P2 and the marble pattern of the first image P1 is prevented, the text is easily recognized.

In the present example, an example in which the color of the pattern of the first image and the color of the text of the second image are the similar colors, and the color of the gradation pattern of the second image is the non-similar colors is described. For the reasons described above, it is preferable that a combination of colors is the combination shown in the present example.

However, the combination of the colors may be other combinations. That is, the color of the pattern of the first image and the color of the text of the second image may be the non-similar colors. Even in the case of the non-similar colors, the text may be buried in the background and the visibility of the text may deteriorate depending on the arrangement and size of the pattern and the text. In this case, it is possible to suppress the crosstalk and improve the visibility of the text by combining the gradation pattern of the second image. The color of the text of the second image and the color of the gradation pattern of the second image may be the similar colors. Thus, even for the similar colors, in a case where there is a difference in any of hue, saturation, and brightness, the effect of improving the visibility of the text can be expected.

### [Modification example 1]

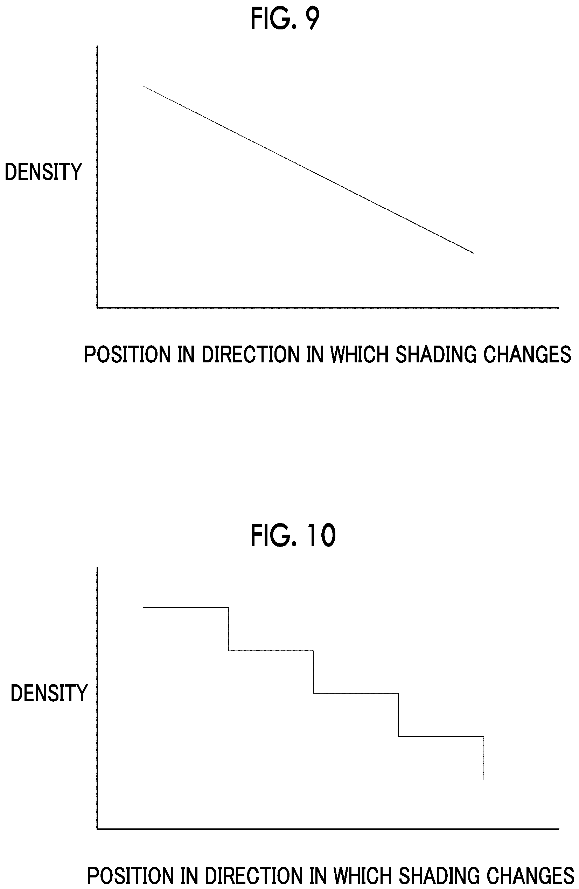

Although it has been described in the present example that the change in shading in the gradation pattern of the second image P2 is continuous as shown in Fig. 9, but the change in shading may be stepwise as shown in Fig. 10. In Figs. 9 and 10, a direction in which the shading of the horizontal axis changes is the Y direction in the aforementioned example. Since the gradation pattern is hardly noticeable as the background of the text, it is preferable that the color is expressed in a gray gradation and the change in shading is continuous. It is preferable that the gradation pattern is expressed in the gray gradation, but the gradation pattern may be expressed in a binary gradation.

### [Modification example 2]

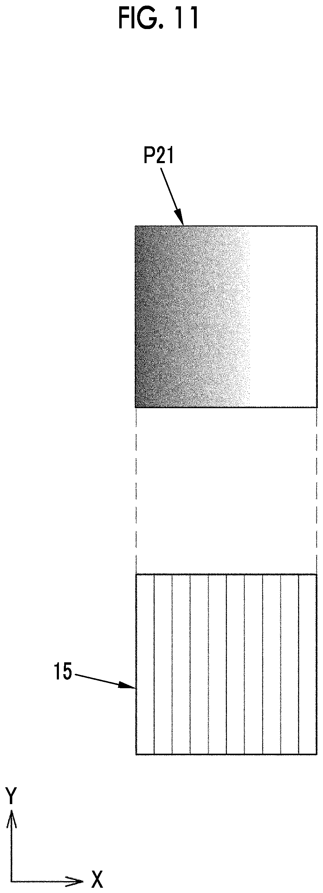

As shown in Fig. 11, in the element image P21 of the second image P2, the direction in which the shading in the gradation pattern changes may be the same direction as the arrangement direction (X direction) of the cylindrical lenses 15. In this manner, in a case where the first image P1 and the second image P2 are switched, the change in shading of the gradation pattern gives a natural impression.

The direction in which the shading of the gradation pattern changes may not be the arrangement direction (X direction) of the cylindrical lenses 15 or the direction (Y direction) orthogonal to the arrangement direction, and may be, for example, an oblique direction.

### [Second embodiment]

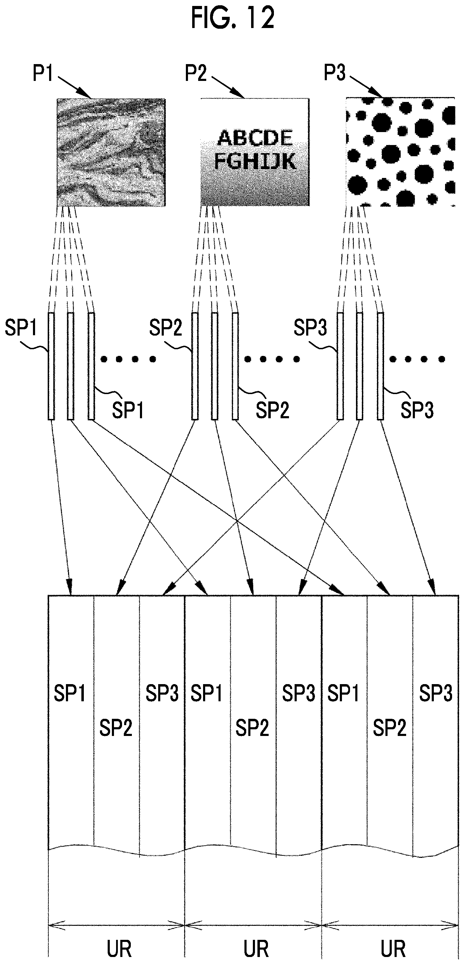

A second embodiment shown in Figs. 12 to Fig. 14 is an example in which a third image P3 is added as an image included in the image forming layer 13 in addition to the first image P1 and the second image P2. In the third image P3, a pattern different from the patterns included in the first image P1 and the second image P2 is represented as a design. The pattern of the third image P3 is, for example, a dot pattern.

As shown in Fig. 12, in a case where the image forming layer 13 has the first image P1 to the third image P3, third divided images SP3 are generated by dividing the third image P3 into strips in addition to the first divided image SP1 and the second divided image SP2.

On the flat surface 11A of the lenticular lens sheet 11, one third divided image SP3 is arranged in addition to one first divided image SP1 and one second divided image SP2 in each unit region UR corresponding to the cylindrical lens 15. That is, in one unit region UR, a set of three divided images of the first divided image SP1, the second divided image SP2, and the third divided image SP3 is arranged. A width of the third divided image SP3 in the X direction is the same as the width of the first divided image SP1 and the second divided image SP2.

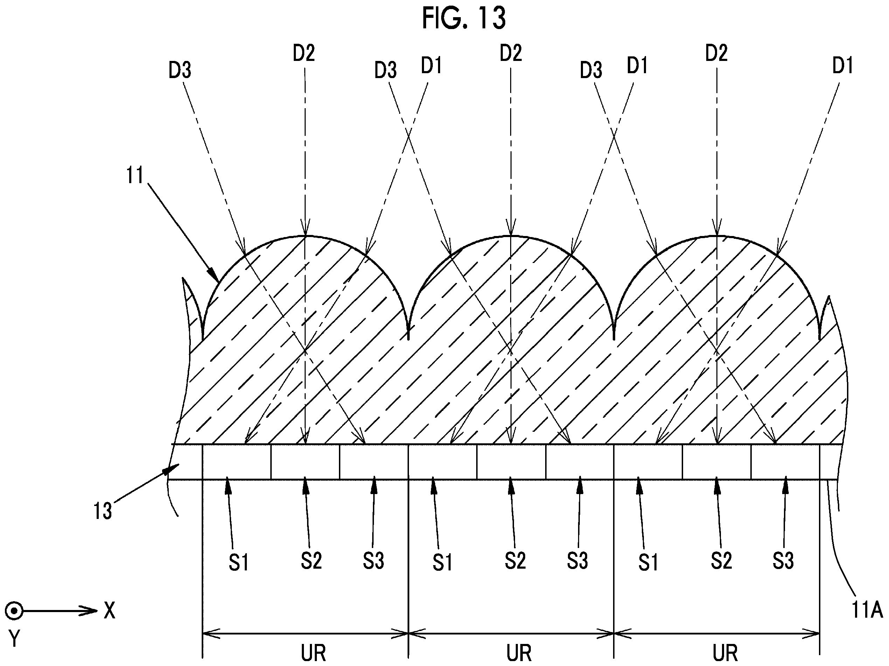

Fig. 13 shows a cross section of the decorative sheet 10 in the X direction. Within each unit region UR shown in Fig. 13, the first divided image SP1, the second divided image SP2, and the third divided image SP3 are arranged in order from the left. Due to an action of each cylindrical lens 15, the image of the first divided image SP1, the second divided image SP2, and the third divided image SP3 within each unit region UR which is viewed by a user changes in an observation direction.

In a case where the image forming layer 13 of the decorative sheet 10 is observed from a first direction D1 inclined to the right from the second direction D2 corresponding to an orthogonal direction to the flat surface 11A, only the first divided image SP1 is observed. In a case where the image forming layer 13 of the decorative sheet 10 is observed from the second direction D2, only the second divided image SP2 is observed. In a case where the image forming layer 13 of the decorative sheet 10 is observed from the second direction D2 inclined to the left from the second direction D2 which is the orthogonal direction, only the third divided image SP3 is observed.

The first divided image SP1 and the second divided image SP2 are the same as in the first embodiment. A part of the dot pattern of the third image P3 is formed in the third divided image SP3.

Therefore, the observation direction in which the decorative sheet 10 is observed through the lenticular lens sheet 11 is changed in order of the first direction D1, the second direction D2, and the third direction D3, and thus, the first image P1 of which the design is the marble pattern, the second image P2 of which the design includes the text and the background of the text as the gradation pattern, and the third image P3 of which the design is the dot pattern are observed in order. The color of the pattern of the third image P3 is the non-similar color to the color of the pattern of the first image P1 or the color of the text of the second image P2. The color of the pattern of the third image P3 includes, for example, a plurality of colors mainly including red, and is the non-similar color to the light blue which is the color of the marble pattern of the first image P1 or the text of the second image P2.

(A) to (C) of Fig. 14 show examples in which the decorative sheet 10 according to the second embodiment is used for a dial of a wristwatch 41. In (A) to (C) of Fig. 14, in the wristwatch 41, a long hand and a short hand indicate about 10:05 as in the example of (A) and (B) of Fig. 8. The decorative sheet 10 is used for a dial having a background of the long hand and the short hand. In a case where the observation direction with respect to the dial for which the decorative sheet 10 is used changes, an image to be viewed is switched to three images of the first image P1, the second image P2, and the third image P3. (A) of Fig. 14 shows a state in which the first image P1 is viewed. (B) of Fig. 14 shows a state in which the second image P2 is viewed. (C) of Fig. 14 shows a state in which the third image P3 is viewed.

Since the color of the dot pattern of the third image P3 is a reddish color, the color thereof is the non-similar color to the light blue of the marble pattern of the first image P1 and the text of the second image P2. Therefore, in a case where the first image P1 or the third image P3 is switched to the second image P2, the text is not buried in the dot pattern.

As described above, in a case where the image forming layer 13 includes three images of the first image P1, the second image P2, and the third image P3, the following effects can be obtained. That is, in a case where the observation direction is changed in one direction, for example, the image to be viewed is switched to the first image P1, the second image P2, and the third image P3 in order. In this case, the text of the second image P2 is viewed between the pattern of the first image P1 and the pattern of the third image P3. At this time, the gradation pattern is present in the background of the text, and the gradation pattern is mixed with the pattern of the first image P1. Thus, an effect of changing any one of the hue, the saturation, and the brightness for the color of the pattern of the first image P1 is obtained. Therefore, similarly to the first embodiment, the crosstalk of the text and the pattern is suppressed. Accordingly, the user clearly view even the text of the second image P2 rising in a case where the patterns are switched without the text being buried in each pattern while enjoying the change of the different patterns of the first image P1 and the third image P3.

The image forming layer 13 in each embodiment is an example, and can be variously modified. As shown in the first embodiment, the image forming layer 13 may have at least a set of images including the first image P1 having the design of the pattern and the second image P2 having the text and the gradation pattern. However, as shown in the second embodiment, the image forming layer may include three or more images by further adding the third image P3 or adding a fourth image or a fifth image.

It has been described that the second image in each embodiment is the text expressed by the lines, that is, the lines are used as the components of the text. The text may be used for meaningless character strings such as "ABCD..." as in the aforementioned example, or may be used for character strings representing meaningful words as shown in Fig. 15. In the example of the second image P2 shown in Fig. 15, the element image P22 representing the lines is the element image P22 representing "apple" which is a common name of an article as a character string representing a meaningful word.

The second image P2 may be an image representing a sign or a symbol mark instead of or in addition to the text. The symbol mark includes a corporate identity mark which is a corporate symbol mark.

The element image P22 shown in Fig. 16 uses lines as components of a shape of the article, and the second image P2 shown in Fig. 16 is an image including a shape of an article having lines as components and a gradation pattern as a background of the shape of the article. In the element image P22 of Fig. 16, the shape of the article is specifically a shape of an apple.

The element image P22 shown in Fig. 17 uses lines as components of line drawing including a straight line and/or a curve, and the second image P2 shown in Fig. 17 is an image including line drawing having lines as components and a gradation pattern as a background of the line drawing. In the element image P22 of Fig. 17, the line drawing specifically represents a circle, a triangle, and a quadrangular.

Hereinafter, various usage modes of the decorative sheet 10 of the present invention will be described. Fig. 18 shows an example in which the decorative sheet 10 is attached to an interior component of a vehicle 21. The decorative sheet 10 is attached such that the image forming layer 13 side comes into contact with the interior component.

The decorative sheet 10 is attached to, for example, a steering wheel 22, a door panel 23, and a dashboard 24 of the vehicle 21. Since the decorative sheet 10 has flexibility, the decorative sheet is attached in a state of being curved according to a curved surface of an attachment portion. For example, in the example shown in Fig. 18, a surface of the dashboard 24 is a curved surface, and the decorative sheet 10 is curved according to a shape of the curved surface. As shown in Fig. 19, the lenticular lens sheet 11 has flexibility, and can be curved.

As other purposes of the decorative sheet 10, for example, the decorative sheet may be used as a mount for a calendar, or may be used for various decorations such as wall decoration for decorating a wall. The decorative sheet may be used for decoration of electric appliances such as smartphones and tablets and decoration of articles such as furniture.

Although it has been described that the marble pattern and the dot pattern are used as the patterns of the images such as the first image P1 and the second image P2, the present embodiment is not limited to these patterns, various patterns such as a check pattern can be used.

### Explanation of References

10: decorative sheet
11: lenticular lens sheet
11A: flat surface
13: image forming layer
15: cylindrical lens
15A: convex shape
21: vehicle
22: steering wheel
23: door panel
24: dashboard
41: wristwatch
D1: first direction
D2: second direction
D3: third direction
DV: orthogonal direction
P1: first image
P2: second image
P3: third image
SP1: first divided image
SP2: second divided image
SP3: third divided image
UR: unit region
W, W1, W2: width

## Claims

1. A decorative sheet comprising:
a lenticular lens sheet that has a plurality of cylindrical lenses each having a convex shape, and has a flat surface on a side opposite to the convex shape; and
an image forming layer that is formed on the flat surface side, and includes a first image and a second image, the first image including a plurality of first divided images divided into strips, and the second image including a plurality of second divided images divided into strips,
wherein the first divided image and the second divided image are arranged along an arrangement direction of the cylindrical lens within a unit region corresponding the cylindrical lens, and the first image and the second image are switched by changing an observation direction in which the image forming layer is observed through the lenticular lens sheet,
the first image is an image representing a pattern, and
the second image is an image including a line, and a gradation pattern which is a background of the line.

2. The decorative sheet according to claim 1,
wherein the line is used as a component of any of line drawing including a straight line and/or a curve, a shape of an article, a text, a sign, and a symbol mark.

3. The decorative sheet according to claim 1 or 2,
wherein the image forming layer includes a third image representing a pattern different from the pattern included in the first image and the second image in addition to the first image and the second image, and
a third divided image obtained by dividing the third image into strips is arranged in addition to the first divided image and the second divided image in the unit region.

4. The decorative sheet according to any one of claims 1 to 3,
wherein the gradation pattern is expressed in a gray gradation.

5. The decorative sheet according to any one of claims 1 to 4,
wherein shading of the gradation pattern continuously or stepwisely changes.

6. The decorative sheet according to claim 4 or 5,
wherein a direction in which the shading of the gradation pattern changes and the arrangement direction of the cylindrical lens are the same direction.

7. The decorative sheet according to any one of claims 1 to 6,
wherein the gradation pattern has an achromatic color.

8. The decorative sheet according to any one of claims 1 to 7,
wherein colors of the pattern of the first image and the line of the second image are similar colors, and a color of the gradation pattern as the background of the line of the second image is a non-similar color to the color of the line.
